# EUROPÄISCHE PATENTSCHRIFT

(11) **EP 3 453 559 B1**
(45) Veröffentlichungstag und Bekanntmachung des Hinweises auf die Patenterteilung: **08.04.2020**
(21) Anmeldenummer: 17190674.6
(22) Anmeldetag: 12.09.2017
(51) Int. Cl.: B60L 50/50, H01R 31/06, B60L 53/14, B60L 53/16

(54) **LADEKABEL UND ADAPTER ZUM ELEKTRISCHEN LADEN EINES ENERGIESPEICHERS AN EINER ENERGIEVERSORGUNGSEINRICHTUNG**
CHARGING CABLE AND ADAPTER FOR ELECTRICALLY CHARGING AN ENERGY STORAGE DEVICE ON AN ENERGY SUPPLY DEVICE
CÂBLE DE CHARGE ET ADAPTATEUR PERMETTANT LE CHARGEMENT ÉLECTRIQUE D'UN

(43) Veröffentlichungstag der Anmeldung: 13.03.2019
(73) Patentinhaber: Niederl, Dietmar, 8091 Jagerberg (AT)
(72) Erfinder: Niederl, Dietmar, 8091 Jagerberg (AT)
(74) Vertreter: Wirnsberger & Lerchbaum Patentanwälte OG

(56) Entgegenhaltungen:
- WO-A1-2010/034741
- DE-A1-102011 007 763
- DE-A1-102013 212 219
- US-A1- 2013 314 034

## Beschreibung

Die Erfindung betrifft ein Ladekabel, insbesondere zum elektrischen Laden eines Elektrofahrzeuges, aufweisend eine Ladeleitung, welche einerseits mit einer Anschlussvorrichtung mit einem aufzuladenden Energiespeicher lösbar elektrisch verbindbar ist und andererseits mit einer Adapterschnittstelle elektrisch verbunden ist, welche mit einem Adapter formschlüssig lösbar verbindbar ist, wobei der Adapter mit einer Energieversorgungseinrichtung lösbar elektrisch verbindbar ist, um elektrische Energie bzw. einen Ladestrom von der Energieversorgungseinrichtung über das Ladekabel an den aufzuladenden Energiespeicher zu übertragen.

Weiter betrifft die Erfindung einen Adapter für ein Ladekabel, welcher einerseits mit einer Adapterschnittstelle des Ladekabels formschlüssig lösbar verbindbar ist und andererseits mit einer Energieversorgungseinrichtung lösbar elektrisch verbindbar ist, um elektrische Energie bzw. einen Ladestrom von der Energieversorgungseinrichtung über den Adapter an das Ladekabel zu übertragen.

Des Weiteren betrifft die Erfindung ein Verfahren zum elektrischen Laden eines Energiespeichers, insbesondere eines Energiespeichers eines Elektrofahrzeuges, an einer Energieversorgungseinrichtung, mit einer Ladeeinrichtung, aufweisend eine Ladeleitung, welche einerseits mit einer Anschlussvorrichtung mit dem aufzuladenden Energiespeicher lösbar elektrisch verbunden wird und andererseits über einen formschlüssig lösbar mit einer Adapterschnittstelle verbundenen Adapter mit der Energieversorgungseinrichtung lösbar elektrisch verbunden wird.

Um Elektrofahrzeuge flexibel an unterschiedlichen Energieversorgungseinrichtungen elektrisch laden zu können, werden Ladeeinrichtungen aus einem Ladekabel sowie einem lösbar mit dem Ladekabel verbundenen Adapter verwendet. Üblicherweise ist das Ladekabel hierzu derart ausgeführt, dass dessen Ladeleitung einerseits mit dem Elektrofahrzeug elektrisch verbunden werden kann und andererseits eine Adapterschnittstelle aufweist, welche mit auf unterschiedliche Energieversorgungseinrichtungen ausgelegten Adaptern lösbar verbindbar ist. Adapter können etwa für ein Anstecken an verschiedene länderspezifische Haushaltssteckdosen oder Drehstromsteckdosen ausgelegt sein. Dies bietet den Vorteil, dass nur ein Ladekabel mitgeführt werden muss, welches durch ein lösbares Verbinden mit einem passenden Adapter flexibel auf eine vorhandene Ladeinfrastruktur angepasst werden kann.

Während dies eine praktikable Lösung für übliche Haushaltsladeinfrastrukturen darstellt, erfordern viele Elektrofahrzeugladestationen neben einer bloßen Übertragung von elektrischem Strom über die Ladeeinrichtung auch eine Kommunikation zwischen der Ladestation und dem Elektrofahrzeug, etwa um eine zu übertragene Ladeleistung anzupassen. Hierzu ist es erforderlich, dass Steuersignalleitungen in eine Ladeeinrichtung bzw. ein Ladekabel integriert werden, um zusätzlich zu einem Ladestrom auch Steuersignale zwischen der Ladestation und dem Elektrofahrzeug zu übertragen. Entsprechend erhöht sich auch die Anzahl von elektrischen Kontakten in der Adapterschnittstelle und den Adaptern. Dies führt zu einer Vergrößerung der Adapterschnittstelle bzw. der Adapter, wodurch ein Packmaß der Ladeeinrichtung erhöht und eine Handhabung erschwert wird.

Darüber hinaus weisen voluminöse Adapter bzw. Adapterschnittstellen eine höhere Anfälligkeit gegenüber äußeren mechanischen Belastungen auf. Eine Ladeeinrichtung ist üblicherweise wechselnden Witterungsverhältnissen ausgesetzt, insbesondere Feuchtigkeit stellt für elektrische Kontakte ein großes Problem dar. Durch die zusätzlichen elektrischen Steuersignalleiterkontakte wird eine Angriffsfläche für witterungsbedingte Belastungen, insbesondere Korrosion, erhöht und eine Zuverlässigkeit einer mittels der Steuersignale durchgeführten Kommunikation beeinträchtigt.

Hier setzt die Erfindung an. Aufgabe der Erfindung ist es, ein Ladekabel der eingangs genannten Art anzugeben, welches eine hohe Robustheit sowie Praktikabilität aufweist und außerdem geeignet ist, eine verlässliche Kommunikation zwischen einer Energieversorgungseinrichtung und einem aufzuladenden Energiespeicher zu ermöglichen.

Ein weiteres Ziel ist es, einen Adapter der eingangs genannten Art für ein Ladekabel anzugeben, welcher eine hohe Robustheit sowie Praktikabilität aufweist und außerdem geeignet ist, eine verlässliche Kommunikation zwischen einer Energieversorgungseinrichtung und einem aufzuladenden Energiespeicher zu ermöglichen.

Außerdem soll ein Verfahren der eingangs genannten Art zum elektrischen Laden eines Energiespeichers an einer Energieversorgungseinrichtung mit einer Ladeeinrichtung angegeben werden, welches sowohl ein praktikables elektrisches Laden als auch eine verlässliche Kommunikation zwischen der Energieversorgungseinrichtung und dem Energiespeicher ermöglicht.

Die erste Aufgabe wird erfindungsgemäß durch ein Ladekabel der eingangs genannten Art gelöst, bei welchem die Adapterschnittstelle eine Kommunikationseinrichtung aufweist, welche eine drahtlose Kommunikation mit dem eine entsprechende Kommunikationseinrichtung aufweisenden Adapter ermöglicht, wenn der Adapter mit der Adapterschnittstelle verbunden ist, sodass Steuersignale zwischen der Energieversorgungseinrichtung einerseits und einer Elektronik des Ladekabels und/oder eines an das Ladekabel angeschlossenen Energiespeichers andererseits zwischen dem Adapter und der Adapterschnittstelle drahtlos übertragbar sind.

Da Steuersignale drahtlos zwischen der Adapterschnittstelle und dem Adapter übertragbar sind, kann auf elektrische Kontakte zur Übertragung der Steuersignale zwischen der Adapterschnittstelle und dem mit der Adapterschnittstelle lösbar verbindbaren Adapter verzichtet werden. Üblicherweise werden die Steuersignale somit über elektrische Kontakte wie Kupferleitungen bis zum Adapter transportiert, im Adapter in Funksignale oder dergleichen gewandelt, welche in der Adapterschnittstelle wieder in über Kupferleitungen übertragbare elektrische Signale gewandelt werden. Dadurch kann die Adapterschnittstelle robust und kompakt ausgebildet werden, wodurch eine Stabilität der Adapterschnittstelle gegenüber äußeren mechanischen Belastungen erhöht ist und außerdem ein Packmaß des Ladekabels reduziert ist. Damit ist eine hohe Praktikabilität bei einem Transport gegeben und eine Handhabung bei einer Verwendung des Ladekabels erleichtert. Eine geringe Anzahl von elektrischen Kontakten ergibt darüber hinaus eine hohe Widerstandsfähigkeit gegenüber witterungsbedingten Belastungen, da etwa eine Angriffsfläche für Korrosion reduziert ist. Da die Steuersignale nicht über elektrische Kontakte zwischen dem Adapter und der Adapterschnittstelle übertragen werden, wird eine von Umgebungseinflüssen unabhängige, störungsarme

Steuersignalübertragung zwischen Adapter und Adapterschnittstelle erreicht, wodurch eine beständige und verlässliche Kommunikation zwischen der Energieversorgungseinrichtung und dem aufzuladenden Energiespeicher sichergestellt ist.

Eine drahtlose Übertragung von Steuersignalen zwischen der Adapterschnitte und dem Adapter birgt außerdem den Vorteil, dass Adapter, die ein Verbinden des Ladekabels mit einer Energieversorgungseinrichtung ermöglichen sollen, welche keine Übertragung von Steuersignalen erfordert, etwa Adapter für Haushaltssteckdosen, weiterhin kompakt und platzoptimiert ausgebildet sein können. Solche Adapter müssten ansonsten in Bezug auf deren Größe entsprechend einer durch zusätzliche elektrische Kontakte vergrößerten Adapterschnittstelle unnötig angepasst sein.

Es hat sich bewährt, die Adapterschnittstelle bzw. den Adapter derart auszubilden, dass eine formschlüssige lösbare Verbindung, insbesondere durch eine Steckverbindung, zwischen Adapterschnittstelle und Adapter herstellbar ist. Dadurch ist sichergestellt, dass eine beständige mechanische und elektrische Verbindung zwischen den elektrischen Kontakten der Adapterschnittstelle und des Adapters herstellbar ist. Ist die Verbindung als Steckverbindung ausgeführt, ist ein einfaches und schnelles Verbinden von Adapter und Adapterschnittstelle ermöglicht bzw. kann ein Adapter schnell durch einen anderen Adapter ausgetauscht werden. Eine besonders belastbare Verbindung kann dadurch erreicht werden, dass die Adapterschnittstelle und der Adapter durch eine reibschlüssige bzw. kraftschlüssige Verbindung lösbar verbindbar sind.

In der Regel ist ein Schnellverschluss, insbesondere ein Schnappverschluss, vorgesehen, um ein ungewolltes Lösen von Adapterschnittstelle und Adapter zu verhindern. Adapter und Adapterschnittstelle können dann schnell und einfach durch einen Benutzer verbunden bzw. gelöst werden. Besonders geeignet ist ein Schnapphakenverschluss, bei welchem eine lösbare formschlüssige Verbindung hergestellt wird, indem ein Hakenelement elastisch verformt wird und sich anschließend formschlüssig mit einem zu verbindenden Element verhakt. Durch abermaliges elastisches Verformen des Hakenelementes kann dieses wieder gelöst werden. Eine solche Verbindung kann einfach und schnell gelöst und wieder verbunden werden. Überdies können Schnapphakenverschlüsse bzw. Hakenelemente durch ein Gussverfahren, insbesondere durch ein Spritzgussverfahren, einfach ausgeformt bzw. hergestellt werden. Eine schnell lösbare Verbindung kann auch etwa durch einen Bajonettverschluss, eine Schraubverbindung, eine Klemmverbindung oder eine ähnlich zweckmäßige lösbare Verbindungsform umgesetzt sein.

Vorteilhaft ist es, wenn das Ladekabel eine Regeleinrichtung aufweist, um die übertragene elektrische Energie bzw. einen übertragenen Ladestrom zu steuern und/oder zu kontrollieren. Damit kann sichergestellt werden, dass eine übertragene elektrische Energie bzw. ein Ladestrom entsprechend der Leistungsfähigkeit des Ladekabels und/oder der Energieversorgungseinrichtung und/oder des aufzuladenden Energiespeichers übertragen wird. Die Regeleinrichtung sorgt für ein elektrisches Laden mit einer maximal möglichen Ladeleistung und damit für einen zeitoptimierten Ladevorgang, insbesondere unter Berücksichtigung von über das Ladekabel übertragenen Steuersignalen. Die Regeleinrichtung kann dabei derart ausgebildet sein, dass diese mit einer Energieversorgungseinrichtung und/oder dem aufzuladenden Energiespeicher kommuniziert, um eine elektrische Energieübertragung optimal anzupassen.

Um ein optimiertes elektrisches Laden zu ermöglichen, ist es günstig, wenn die Regeleinrichtung den Ladestrom entsprechend einer anliegenden elektrischen Spannung und/oder Stromfrequenz anpasst. Zweckmäßig kontrolliert die Regeleinrichtung den Ladevorgang, um bei Anomalien, beispielsweise Strom- und/oder Spannungsänderungen, eine übertragene elektrische Leistung anzupassen oder einen Ladevorgang zu unterbrechen, beispielsweise durch einen Fehlerschutzschalter und/oder eine Überstromschutzeinrichtung, um eine Sicherheit des elektrischen Ladens zu gewährleisten. Vorteilhaft kann vorgesehen sein, dass die Regeleinrichtung eine Benutzerschnittstelle aufweist, über welche ein Benutzer Spezifikationen betreffend den Ladevorgang eingeben kann, etwa einen maximalen Ladestrom, eine vorhandene Energieversorgungseinrichtung, etc., um einen gewünschten Ladevorgang vorzugeben.

Insbesondere bei einem elektrischen Laden eines Elektrofahrzeuges an Haushalts- oder Drehstromsteckdosen ist es zweckmäßig, wenn die Regeleinrichtung als sogenannte In-Cable-Control-Box ausgebildet ist, um durch ein Steuern und/oder Kontrollieren des übertragenen Ladestromes ein sicheres elektrisches Laden zu gewährleisten. Die In-Cable-Control-Box übernimmt dabei jene notwendigen Sicherheitsfunktionen, welche ansonsten von einer Elektrofahrzeugladestation übernommen werden. Hierzu kann durch die Regeleinrichtung auch eine notwendige Kommunikation mit dem Elektrofahrzeug übernommen werden, wodurch jede Energieversorgungseinrichtung zum elektrischen Laden eines Elektrofahrzeuges verwendet werden kann.

Die Regeleinrichtung kann als Teil der Ladeleitung ausgebildet sein, womit ein konstruktiv einfacher Aufbau gegeben ist und eine Wartung erleichtert wird. Zweckmäßig ist es, wenn die Regeleinrichtung in die Adapterschnittstelle integriert ist, was eine Handhabung des Ladekabels erleichtert.

Günstig ist es wenn die Adapterschnittstelle zumindest fünf elektrische Kontakte aufweist, welche mit elektrischen Kontakten am Adapter lösbar verbindbar sind. Dadurch ist eine Anpassung an eine Vielzahl von Energieversorgungseinrichtungen ermöglicht, da je nach Energieversorgungseinrichtung elektrische Energie bzw. ein Ladestrom über mehrere Leitungen parallel mit dem Ladekabel übertragen werden kann.

Vorteilhaft ist es, wenn die Adapterschnittstelle drei Phasenkontakte, einen Neutralleiterkontakt und einen Schutzleiterkontakt aufweist, welche mit entsprechenden Kontakten am Adapter lösbar elektrisch verbindbar sind. Die Phasenkontakte und der Neutralleiterkontakt sind vorgesehen, um eine Übertragung eines Ladestromes, insbesondere eines Dreiphasenwechselstromes, zu ermöglichen, der Schutzleiterkontakt dient der Sicherheit und sorgt für einen Potentialausgleich gegenüber einem Erdpotential. Damit ist ein sicheres elektrisches Laden bzw. eine sichere elektrische Energieübertragung mit Dreiphasenwechselstrom ermöglicht. Je nach vorhandener Energieversorgungseinrichtung ist sowohl ein einphasiges als auch ein mehrphasiges elektrisches Laden möglich, wodurch das Ladekabel bzw. der Adapter für ein elektrisches Laden an allen gängigen Normsteckdosen geeignet ist.

Das weitere Ziel wird erfindungsgemäß mit einem Adapter der eingangs genannten Art erreicht, welcher eine Kommunikationseinrichtung aufweist, welche eine drahtlose Kommunikation mit der eine entsprechende Kommunikationseinrichtung aufweisenden Adapterschnittstelle ermöglicht, wenn der Adapter mit der Adapterschnittstelle verbunden ist, sodass Steuersignale zwischen der Energieversorgungseinrichtung einerseits und einer Elektronik des Ladekabels und/oder eines an das Ladekabel angeschlossenen Energiespeichers andererseits drahtlos zwischen dem Adapter und der Adapterschnittstelle übertragbar sind.

Durch die drahtlose Übertragung von Steuersignalen zwischen dem Adapter und der Adapterschnittstelle, kann auf elektrische Kontakte zur Übertragung der Steuersignale auf einer der Adapterschnittstelle zugewandten Seite des Adapters verzichtet werden. Dadurch kann der Adapter kompakt und mit hoher Robustheit gegenüber mechanischen Belastungen ausgebildet werden. Damit ist einerseits eine Handhabung bei einer Verwendung des Adapters erleichtert und außerdem der Platzbedarf bei einem Transport des Adapters reduziert, was insbesondere bei einer Mitnahme von mehreren Adaptern ein relevantes Kriterium darstellt. Vorteilhaft sind keine elektrischen Steuersignalkontakte auf der der Adapterschnittstelle zugewandten Seite des Adapters notwendig, wodurch auch eine Widerstandsfähigkeit des Adapters gegenüber witterungsbedingten Belastungen erhöht ist, da etwa Angriffsflächen für Korrosion reduziert sind. Da die Steuersignale nicht über elektrische Kontakte zwischen dem Adapter und der Adapterschnittstelle übertragen werden, wird eine störungsunempfindliche Steuersignalübertragung zwischen Adapter und Adapterschnittstelle erreicht, wodurch eine beständige und verlässliche Kommunikation zwischen der Energieversorgungseinrichtung und dem aufzuladenden Energiespeicher sichergestellt ist. Zweckmäßigerweise weist der Adapter hierzu auf einer der Energieversorgungseinrichtung zugewandten Seite sowohl elektrische Kontakte zum Aufnehmen eines zu übertragenden Ladestromes als auch zumindest einen elektrischen Kontakt für eine Übertragung von Steuersignalen auf. Günstig ist es, wenn zumindest einer dieser Steuersignalkontakte mit der Kommunikationseinrichtung des Adapters elektrisch verbunden ist, um die über diesen Steuersignalkontakt übertragenen Steuersignale drahtlos zwischen dem Adapter und der Adapterschnittstelle zu übertragen, womit die vorstehend dargelegten Vorteile erzielt werden.

Günstig ist es, wenn der Adapter zumindest fünf elektrische Kontakte, welche mit elektrischen Kontakten an der Adapterschnittstelle lösbar elektrisch verbindbar sind, sowie zumindest einen weiteren elektrischen Steuersignalleiterkontakt aufweist, welcher zur Übertragung von Steuersignalen mit der Kommunikationseinrichtung des Adapters elektrisch verbunden ist. Dadurch ist eine Anpassung an verschiedene Energieversorgungseinrichtungen bzw. deren elektrische Kontakte ermöglicht, da je nach Energieversorgungseinrichtung elektrische Energie bzw. ein Ladestrom über mehrere Leitungen parallel übertragen werden kann. Um Steuersignale mit der Kommunikationseinrichtung des Adapters zu übertragen, sind zumindest zwei der elektrischen Kontakte des Adapters mit der Kommunikationseinrichtung des Adapters elektrisch verbunden, sodass eine elektrische Größe an die Kommunikationseinrichtung übertragen werden kann. Hierzu kann zusätzlich zum Steuersignalleiterkontakt beispielsweise ein als Schutzleiterkontakt ausgebildeter elektrischer Kontakt des Adapters mit der Kommunikationseinrichtung elektrisch verbunden sein. Zweckmäßig kann es auch sein, zwei oder mehrere elektrische Steuersignalleiterkontakte vorzusehen, welche mit der Kommunikationseinrichtung des Adapters elektrisch verbunden sind, wodurch eine Steuersignalübertragung elektrisch von den anderen elektrischen Kontakten des Adapters entkoppelt ist. Indem Steuersignale an die Kommunikationseinrichtung des Adapters übertragbar sind, ist eine drahtlose Kommunikation mittels der Kommunikationseinrichtung des Adapters ermöglicht. Ein Signal kann durch eine beliebige elektrische Größe gebildet sein, welche sich eignet um Informationen zu übertragen, beispielsweise eine Spannungsdifferenz, ein Strom, eine Frequenz, eine Amplitude bzw. ein Scheitelwert, etc.

Mit Vorteil weist der Adapter drei Phasenkontakte, einen Neutralleiterkontakt, einen Schutzleiterkontakt sowie zumindest einen Steuersignalleiterkontakt auf, wobei die Phasenkontakte, der Neutralleiterkontakt sowie der Schutzleiterkontakt mit entsprechenden Kontakten an der Adapterschnittstelle lösbar elektrisch verbindbar sind und der zumindest eine Steuersignalleiterkontakt des Adapters mit der Kommunikationseinrichtung des Adapters elektrisch verbunden ist. Ein derart ausgebildeter Adapter ist geeignet, eine sichere Übertragung von Dreiphasenwechselstrom zu gewährleisten und etwa einen Anschluss eines Ladekabels an eine Drehstromsteckdose oder insbesondere im Falle eines Elektrofahrzeuges etwa einen Anschluss an eine für ein elektrisches Laden eines Elektrofahrzeuges ausgelegte Ladestation, welche üblicherweise ebenfalls eine Übertragung über zumindest drei Phasen vorsieht, zu ermöglichen. Gleichzeitig ist durch die drahtlose Kommunikation bzw. Steuersignalübertragung mittels der Kommunikationseinrichtung des Adapters eine sichere und beständige Übertragung der Steuersignale zwischen der Ladestation und dem an die Ladestation angeschlossenen Elektrofahrzeug gewährleistet.

Günstig ist es, wenn der Adapter als IEC 62169 Typ 2 Stecker ausgebildet ist. Diese Anschlussvorrichtung stellt einen Standard für das elektrische Verbinden von Elektrofahrzeugen mit Energieversorgungseinrichtungen bzw. Ladestationen dar und ermöglicht ein sicheres elektrisches Laden über drei Phasen. Vorgesehen sind dabei drei Phasenkontakte, ein Neutralleiterkontakt, ein Schutzleiterkontakt sowie zwei Steuersignalleiterkontakte. Die beiden Steuersignalleiterkontakte werden als Proximity-Pilot-Kontakt und Control-Pilot-Kontakt bezeichnet und sind vorgesehen, Steuersignale zwischen der Ladestation und dem mit der Ladestation elektrisch verbundenen Elektrofahrzeug auszutauschen. Es hat sich bewährt, dass beide Steuersignalleiterkontakte des Adapters sowie optional auch der Schutzleiterkontakt mit der Kommunikationseinrichtung des Adapters elektrisch verbunden sind, wodurch die gesamte Kommunikation zwischen der Ladestation und dem angeschlossenen Energiespeicher bzw. Elektrofahrzeug drahtlos zwischen dem Adapter und der Adapterschnittstelle übertragen wird und eine sichere und robuste Kommunikation gewährleistet ist. Ist eine Regeleinrichtung bzw. eine sogenannte In-Cable-Control-Box im bei einem elektrischen Laden lösbar mit dem Adapter verbundenen Ladekabel vorgesehen, kann eine Kommunikation zwischen der Energieversorgungseinrichtung bzw. Ladestation und dem aufzuladenden Energiespeicher bzw. Elektrofahrzeug über die Regeleinrichtung erfolgen bzw. auch nur zwischen der Energieversorgungseinrichtung und dem angeschlossenen Fahrzeug erfolgen. Der Ladevorgang wird dann durch die Regeleinrichtung kontrolliert und/oder gesteuert, insbesondere auf Basis von durch einen Benutzer vorgegebenen Ladeparametern, beispielsweise einer an der Regeleinrichtung voreingestellten maximalen Ladeleistung.

Zweckmäßigerweise sind Adapter in Form der gängigen Anschlussvorrichtungen ausgebildet, im Fall von Elektrofahrzeugen insbesondere als Combo/CCS-Stecker oder als CHAdeMO-Stecker, um ein elektrisches Laden von Energiespeichern an einer Vielzahl von unterschiedlichen Energieversorgungseinrichtungen zu ermöglichen. Weitere Adapter mit einer an Normsteckdosen angepassten Ausführung, insbesondere in unterschiedlichen länderspezifischen Varianten, sowohl in einphasigen als auch in mehrphasigen Ausführungen, ermöglichen ein flexibles elektrisches Laden des Energiespeichers an einer gerade vorhandenen Infrastruktur.

Vorteilhaft ist es, wenn eine Elektronikeinheit des Adapters mit Energie aus zumindest einem Steuersignalleiterkontakt des Adapters energetisch versorgbar ist, wobei insbesondere eine Energie aus dem Steuersignalleiterkontakt zwischengespeichert wird, bis eine vordefinierte Energiemenge erreicht ist, um eine Kommunikation zwischen der Energieversorgungseinheit und der Elektronikeinheit des Adapters zu ermöglichen, und dadurch die Übertragung eines Ladestromes zu veranlassen. Damit ist ermöglicht, dass eine Basisfunktionalität des Adapters, ohne zusätzliche energetische Versorgung, nur mittels der übertragenen Steuersignale gegeben ist. Hierzu kann beispielsweise Energie aus den Steuersignalleiterkontakten zwischengespeichert werden, etwa mit einem oder mehreren Kondensatoren, bis eine zwischengespeicherte Energie zur Versorgung der Elektronikeinheit ausreicht, beispielsweise um eine gewünschte Basisfunktionalität bereitzustellen, insbesondere eine Kommunikation zwischen der Energieversorgungseinheit und der Elektronikeinheit des Adapters.

Alternativ wäre eine solche zusätzliche Versorgung etwa durch einen in den Adapter oder in ein an den Adapter angeschlossenes Ladekabel eingebauten Energiespeicher denkbar oder auch indem die dafür notwendige Energie durch die Energieversorgungseinrichtung oder den aufzuladenden Energiespeicher zur Verfügung gestellt wird. Üblicherweise wird eine Elektronik im Adapter bzw. im Ladekabel erst durch einen übertragenen Ladestrom mit elektrischer Energie versorgt. Indem eine Elektronikeinheit des Adapters mit elektrischer Energie aus zumindest einem Steuersignalleiterkontakt bzw. mit der Energie von übertragenen Steuersignalen energetisch versorgt wird, kann etwa eine Kommunikation zwischen der Energieversorgungseinrichtung und der Elektronikeinheit des Adapters erfolgen, ohne dass eine zusätzliche Energiequelle zur energetischen Versorgung der Elektronikeinheit des Adapters benötigt wird. Dies ist insbesondere in Fällen vorteilhaft, wenn eine Energieversorgungseinrichtung vor einer Übertragung eines Ladestromes eine Kommunikation bedingt. Die von der Energieversorgungseinrichtung über die Steuersignalleiterkontakte übertragenen Steuersignale können in solchen Fällen dazu verwendet werden, die Elektronikeinheit des Adapters mit Energie zu versorgen, wodurch diese in die Lage versetzt wird, mit der Energieversorgungseinrichtung zu kommunizieren und damit eine Übertragung des Ladestromes zu veranlassen. Wird ein Ladestrom übertragen, ist eine energetische Versorgung der gesamten Elektronik des Adapters bzw. eines an den Adapter angeschlossenen Ladekabels durch den übertragbaren Ladestrom möglich. Besonders bevorzugt ist eine elektrische Schaltung zur Energieentnahme aus zumindest einem Steuersignalleiterkontakt bzw. aus den übertragenen Steuersignalen dabei derart ausgebildet, dass eine Kommunikation mittels der über den zumindest einen Steuersignalleiterkontakt des Adapters übertragenen Steuersignale und die energetische Versorgung der Elektronikeinheit des Adapters mit Energie aus dem zumindest einen Steuersignalleiterkontakt des Adapters gleichzeitig durchführbar ist. Eine Energieentnahme aus einem Steuersignal führt dabei nicht zu einer Änderung eines Informationsgehaltes des Steuersignals, weshalb eine Kommunikation unbeeinflusst von der Energieentnahme durchgeführt werden kann.

Insbesondere beim elektrischen Laden eines Elektrofahrzeuges an einer Ladestation ist häufig vor einer Übertragung des Ladestromes eine Kommunikation zwischen der Ladestation und dem Elektrofahrzeug erforderlich, um etwa eine zu übertragende Ladeleistung festzulegen. Ist vorgesehen, dass diese Kommunikation über eine im Ladekabel angeordnete Regeleinrichtung erfolgt bzw. über ein solche gesteuert wird, muss jedoch vorab eine energetische Versorgung der Regeleinrichtung gegeben sein, um das Kommunizieren zu ermöglichen. Durch die energetische Versorgung der Elektronikeinheit im Adapter aus den von der Ladestation übertragenen Steuersignalen, kann die Elektronikeinheit eine Ladestromfreigabe veranlassen, etwa indem die Elektronikeinheit vorgibt, dass ein bestimmtes Elektrofahrzeug an die Ladestation angeschlossen wäre. Der Adapter simuliert dabei gegenüber der Ladestation ein Elektrofahrzeug, beispielsweise indem bei Erfassung von vorbestimmten Signalen ein Innenwiderstand im Adapter geändert wird. Die Elektronikeinheit simuliert somit unter Verwendung der über den Steuersignalleiterkontakt gewonnenen, gegebenenfalls zwischengespeicherten, Energie, gegenüber der Ladestation ein bestimmtes Elektrofahrzeug wäre an die Ladestation angeschlossen und veranlasst somit die Ladestation einen Ladestrom freizugeben.

Es wäre denkbar, eine solche Funktionalität auch in Adaptern bzw. Ladekabeln vorzusehen, welche keine drahtlose Übertragung von Steuersignalen zwischen dem Adapter und der Adapterschnittstelle des Ladekabels vorsehen. Vorteilhaft könnte dann ein Adapter bzw. ein Ladekabel der eingangs genannten Art derart ausgebildet sein, dass eine Elektronikeinheit im Adapter bzw. im Ladekabel mit Energie aus zumindest einem elektrischen Steuersignalleiterkontakt des Adapters oder der Adapterschnittstelle energetisch versorgbar ist. Wenngleich eine solche Ladeeinrichtung aufgrund einer Übertragung von Steuersignalen zwischen dem Adapter und der Adapterschnittstelle über miteinander lösbare elektrische Kontakte des Adapters und der Adapterschnittstelle nachteilig gegenüber einer Ladeeinrichtung mit drahtloser Übertragung der Steuersignale zwischen dem Adapter und der Adapterschnittstelle ist, wird dessen Einsatzfähigkeit durch eine solche Ausgestaltung entsprechend den vorstehend genannten Vorteilen erhöht, insbesondere in Fällen, wenn eine Energieversorgungseinrichtung eine Kommunikation vor einer Übertragung eines Ladestromes bedingt.

Eine Ladeeinrichtung zum elektrischen Laden eines Energiespeichers an einer Energieversorgungseinrichtung umfasst bevorzugt ein erfindungsgemäßes Ladekabel und einen erfindungsgemäßen Adapter. Dadurch wird ein besonders robustes und flexibel einsetzbares Ladekabel erreicht, welches insbesondere zum elektrischen Laden eines Elektrofahrzeuges einsetzbar ist. Dabei ist vorgesehen, dass der Adapter und die Adapterschnittstelle des Ladekabels lösbar elektrisch verbunden sind, sodass Steuersignale, die zwischen der Energieversorgungseinrichtung und einer Elektronik im Ladekabel und/oder im aufzuladenden Energiespeicher über die Ladeeinrichtung übertragen werden, drahtlos zwischen dem Adapter und der Adapterschnittstelle übertragbar sind. Üblicherweise werden die Steuersignale zwischen dem Adapter und der Adapterschnittstelle drahtlos und zwischen der Adapterschnittstelle und dem Energiespeicher bzw. einer Elektronik im Ladekabel drahtgebunden übertragen.

Die Vorteile die sich daraus ergeben, dass die Ladeeinrichtung, ein solches Ladekabel und solchen Adapter umfasst, entsprechen den Vorteilen, welche einem derart ausgebildeten Ladekabel bzw. derart ausgebildeten Adapter, wie obig dargelegt, zugeschrieben sind. Die drahtlose Übertragbarkeit von Steuersignalen zwischen der Adapterschnittstelle und dem Adapter ermöglicht eine kompakte und robuste Ausbildung der Adapterschnittstelle und des Adapters, womit eine entsprechend kompakte und robuste Ladeeinrichtung, mit ausgeprägter Stabilität gegenüber mechanischen Belastungen gegeben ist. Die Ladeeinrichtung ist weiter entsprechend dessen Bestandteilen mit einem praktikablen Packmaß ausgeführt und erleichtert eine Handhabung bei einer Verwendung der Ladeeinrichtung. Aufgrund der geringen Anzahl an elektrischen Kontakten in der Adapterschnittstelle und dem entsprechend ausgebildeten Adapter weist die Ladeeinrichtung eine hohe Widerstandsfähigkeit gegenüber witterungsbedingten Belastungen auf. Da die Steuersignale nicht über anfällige elektrische Kontakte zwischen dem Adapter und der Adapterschnittstelle übertragen werden, ist eine beständige und verlässliche Kommunikation zwischen der Energieversorgungseinrichtung und dem aufzuladenden Energiespeicher gewährleistet.

Günstig ist es, wenn die Kommunikationseinrichtungen im Adapter und in der Adapterschnittstelle als RFID-System ausgebildet sind, um die Steuersignale zwischen dem Adapter und der Adapterschnittstelle zu übertragen. Durch die geringe Größe eines RFID-Systems, ist ein solches System ohne wesentliche Auswirkungen auf eine Kompaktheit und/oder Handhabbarkeit in den Adapter bzw. die Adapterschnittstelle integrierbar. Eine Kommunikation erfolgt dabei zwischen einer Basiseinheit, welche ein hochfrequentes elektromagnetisches Wechselfeld erzeugt und einer Interaktionseinheit, auch als RFID-Tag bezeichnet, welche mit diesem elektromagnetischen Wechselfeld interagiert und auf dieses zurückwirkt, was wiederum von der Basiseinheit gemessen wird. Dadurch ist eine Übertragung von Signalen in beide Richtungen ermöglicht. Die Kommunikationseinrichtung der Adapterschnittstelle ist hierzu als Basiseinheit oder als Interaktionseinheit und die Kommunikationseinrichtung des Adapters korrespondierend dazu als Interaktionseinheit oder als Basiseinheit ausgebildet. Um komplexere Datenübertragungen zu ermöglichen, kann es günstig sein, die beiden Kommunikationseinrichtungen jeweils als Basiseinheit und Interaktionseinheit auszuführen, wodurch eine Kommunikation von jeder der beiden Kommunikationseinrichtungen ausgehen kann, indem deren Basiseinheit das elektromagnetische Wechselfeld erzeugt und die Interaktionseinheit der anderen Kommunikationseinrichtung darauf reagiert.

Vorteilhaft besteht die Interaktionseinheit des RFID-Systems aus einer Antenne, einem analogen Schaltkreis zum Empfangen und Senden sowie einem Mikrocontroller zur Verarbeitung und Speicherung von Information. Damit können Steuersignale übertragen und verarbeitet werden und außerdem Informationen gespeichert werden. Das verwendete elektromagnetische Radiofrequenzfeld, ist zweckmäßig mit einer Frequenz kleiner als 30 MHz ausgeführt, wodurch eine Kommunikationsreichweite limitiert ist. Von Vorteil kann es außerdem sein, wenn das RFID-System ein verschlüsseltes Übertragen von Signalen vorsieht, wodurch eine Datenschutzsicherheit weiter erhöht ist. Es hat sich bewährt, dass die Steuersignale zwischen Adapter und Adapterschnittstelle mittels elektromagnetischer Induktion, in einem Frequenzbereich kleiner als 30 MHz, insbesondere in einem Frequenzbereich von 10 MHz bis 15 MHz, besonders bevorzugt bei etwa 13,56 MHz, übertragbar sind. Dadurch wird erreicht, dass die Kommunikation auf einen Nahbereich limitiert ist und ein sogenanntes close-coupling umgesetzt ist, wodurch eine Sicherheit der Übertragung gewährleistet ist, da elektromagnetische Einstreuungen in die Umgebung äußerst reduziert sind. Vorteilhaft wird hierzu der Übertragungsstandard der sogenannten Near-Field-Communication verwendet, wodurch eine solche Kommunikation einfach umgesetzt werden kann. Indem die Kommunikationseinrichtungen des Adapters bzw. der Adapterschnittstellte als bidirektionales NFC-System ausgeführt sind, ist eine sichere Kommunikation bzw. Steuersignalübertragung zwischen Adapter und Adapterschnittstelle umgesetzt. Alternativ kann eine solche Nahfeldkopplung mit denselben Vorteilen auch durch eine kapazitive Kopplung der Kommunikationseinrichtungen umgesetzt werden.

Von Vorteil ist es, wenn der Adapter eine Kodierung aufweist, welche bei an die Adapterschnittstelle angestecktem Adapter von der Adapterschnittstelle erkennbar ist, um die übertragene elektrische Energie bzw. einen Ladestrom entsprechend der Kodierung zu regeln. Dadurch kann eine übertragene elektrische Energie bzw. ein übertragener Ladestrom entsprechend dem mit der Adapterschnittstelle verbundenen Adapter geregelt bzw. eingestellt werden. Je nach Energieversorgungseinrichtung bzw. der Leistungsfähigkeit einer Energieversorgungseinrichtung werden unterschiedliche Adapter verwendet. Somit kann über eine Identifizierung des Adapters mittels dessen Kodierung eine übertragene Energie bzw. ein Ladestrom bzw. eine Ladeleistung auf die Leistungsfähigkeit der Energieversorgungseinrichtung abgestimmt werden. Zweckmäßig weist eine Adapterschnittstelle hierzu eine Erkennungseinrichtung auf, welche die Kodierung eines mit der Adapterschnittstelle lösbar verbundenen Adapters erkennt. In einer besonders praktikablen Ausführung ist eine Kodierung als Antennenelement ausgeführt, welches von einer mit einer Induktionsschleife ausgestatteten Erkennungseinrichtung erkannt wird, indem das Antennenelement des Adapters mit der Induktionsschleife der Erkennungseinrichtung in Resonanz gebracht wird, was an einer Änderung einer aufgeprägten Spannungs- und/oder Stromamplitude erkennbar ist. Zweckmäßig kann eine solche Kodierung mit RFID-Tags umgesetzt werden, welche von einer Leseeinheit an der Adapterschnittstelle ausgelesen werden. Es ist jedoch auch denkbar die Kodierung durch mechanische, elektrische oder magnetische Merkmale umzusetzen, welche von einer korrespondierenden Erkennungseinrichtung an der Adapterschnittstelle erkennbar sind, um die übertragene elektrische Energie entsprechend zu regeln.

Es ist vorteilhaft, wenn ein Verbinden bzw. Lösen des Adapters mit bzw. von der Energieversorgungseinrichtung und/oder ein Verbinden bzw. Lösen des Adapters mit bzw. von der Adapterschnittstelle und/oder ein Verbinden bzw. Lösen des Ladekabels mit bzw. von dem aufzuladenden Energiespeicher durch zumindest eine Sensoreinrichtung im Ladekabel und/oder im Adapter erkennbar ist. Dadurch ist sichergestellt, dass ein Ladevorgang erst begonnen wird, wenn die Ladeeinrichtung betriebsgemäß angeschlossen ist. Entsprechend ist vorteilhaft vorgesehen, dass ein Ladevorgang sofort unterbrochen wird, wenn eine dieser Verbindungen wieder gelöst wird. Dadurch ist auf einfache Weise eine Eingriffserkennung umgesetzt, welche bei einem mechanischen Lösen der Ladeeinrichtung von der Energieversorgungseinrichtung eine Energieübertragung unterbricht. Insbesondere werden durch eine solche Eingriffserkennung elektrische Lichtbögen und/oder Spannungsspitzen an den Kontakten verhindert, welche bei einem Trennen von elektrischen Kontakten bei gleichzeitiger elektrischer Spannungsbelastung der Kontakte auftreten können.

Hierzu hat es sich bewährt, dass der Adapter ein Tastelement aufweist, welches bei einem Verbinden des Adapters mit der Energieversorgungseinrichtung mit einer Kraft beaufschlagt und/oder bewegt wird, und eine Sensoreinheit in der Adapterschnittstelle angeordnet ist, um eine Kraftbeaufschlagung und/oder Bewegung und/oder Position des Tastelementes zu detektieren. Damit ist auf einfache Weise sichergestellt, dass der Adapter sowohl mit der Energieversorgungseinrichtung als auch mit der Adapterschnittstelle verbunden ist, bevor ein Ladevorgang begonnen wird bzw. ein Ladevorgang sofort unterbrochen wird, wenn die Sensoreinheit in der Adapterschnittstelle ein Lösen einer der Verbindungen detektiert.

Bevorzugt ist es, wenn das Tastelement als federbelastetes Verschiebeelement, aufweisend einen magnetischen Bereich, ausgebildet ist, welches bei einem Verbinden des Adapters mit der Energieversorgungseinrichtung entgegen einer wirkenden Federkraft verschoben wird, und die Sensoreinheit in der Adapterschnittstelle angeordnet und als Magnet-Sensor ausgebildet ist, um eine Position bzw. Bewegung des magnetischen Bereiches des Verschiebeelementes zu detektieren. Damit ist eine Überwachung eines betriebsgemäßen Anschlusses der Ladeeinrichtung an die Energieversorgungseinrichtung in einfacher Weise umgesetzt, da der Magnetsensor sowohl ein betriebsgemäßes Verbinden als auch ein Lösen einer der Verbindungen erkennen kann, womit sichergestellt ist, dass ein Ladestrom nur bei ordnungsgemäßer Verbindung der Ladeeinrichtung mit der Energieversorgungseinrichtung übertragen wird.

Nach demselben vorgenannten Prinzip ist es vorteilhaft, wenn die Anschlussvorrichtung des Ladekabels ein Tastelement aufweist, welches bei einem Verbinden des Ladekabels mit dem aufzuladenden Energiespeicher mit einer Kraft beaufschlagt und/oder bewegt wird, und eine Sensoreinrichtung im Ladekabel angeordnet ist, um eine Kraftbeaufschlagung und/oder Bewegung und/oder Position des Tastelementes der Anschlussvorrichtung zu detektieren. Damit ist auf einfache Weise sichergestellt, dass das Ladekabel mit dem aufzuladenden Energiespeicher verbunden ist, bevor ein Ladevorgang begonnen wird bzw. ein Ladevorgang sofort unterbrochen wird, wenn die Sensoreinrichtung im Ladekabel ein Lösen der Verbindung zwischen Ladekabel und aufzuladenden Energiespeicher detektiert.

Mit Vorteil ist vorgesehen, dass der Adapter und/oder das Ladekabel zumindest einen Temperatursensor aufweisen, um eine Temperatur oder eine Temperaturänderung an den elektrischen Kontakten bzw. elektrischen Leitungen zu bestimmen. Dadurch kann sichergestellt werden, dass der Ladevorgang nicht mit unerwünschten Temperaturerhöhungen verbunden ist, welche insbesondere bei einer Dauerbelastung mit hohem Ladestrom auftreten können. Darüber hinaus kann durch ein Steuern der übertragenen Ladeleistung in Abhängigkeit von einer gemessenen Temperatur eine Ladezeit optimiert werden, indem ein Laden bei einer vorbestimmten maximalen Temperatur erfolgt, beispielsweise der vorbestimmten maximalen Temperatur der Ladeleitung.

Eine einfache Handhabung der Ladeeinrichtung ist dadurch erreicht, dass der Adapter und die Adapterschnittstelle mit einem Schnellverschluss, insbesondere einem Schnappverschluss, lösbar verbunden sind. Durch den Schnellverschluss können Adapter und Adapterschnittstelle schnell und einfach von einem Benutzer verbunden bzw. gelöst werden, beispielsweise um einen Adapter durch einen anderen Adapter auszutauschen. Besonders geeignet ist ein Schnapphakenverschluss, bei welchem eine lösbare formschlüssige Verbindung hergestellt wird, indem ein Hakenelement elastisch verformt wird und sich anschließend formschlüssig mit einem zu verbindenden Element verhakt. Durch abermaliges elastisches Verformen des Hakenelementes kann dieses wieder gelöst werden. Eine solche Verbindung kann einfach und schnell gelöst und wieder verbunden werden. Überdies können Schnapphakenverschlüsse bzw. Hakenelemente einfach durch ein Gussverfahren, insbesondere durch ein Spritzgussverfahren, einfach ausgeformt bzw. hergestellt werden.

Vorteilhaft ist es, wenn das Ladekabel und/oder der Adapter zumindest ein Leuchtelement aufweisen, welches einen Betriebszustand der Ladeeinrichtung signalisiert. Dadurch kann ein Benutzer auf einfache Weise erkennen in welchem Betriebszustand sich die Ladeeinrichtung befindet. Dies kann beispielsweise dadurch erfolgen, dass unterschiedliche Betriebszustände durch unterschiedliche Lichtfarben und/oder zeitabhängige Lichtstärken dargestellt werden. Dies kann durch ein Leuchtelement oder mehrere Leuchtelemente umgesetzt werden. Zweckmäßigerweise umfasst das zumindest eine Leuchtelement eine LED, da eine solche platzsparend in der Ladeeinrichtung verbaut werden kann und nur einen geringen Wartungsaufwand benötigt. Bevorzugt ist das zumindest eine Leuchtelement derart ausgeführt, dass dieses eine Lichtabstrahlung entlang eines Umfangs eines Bereiches des Ladekabels bzw. des Adapters ermöglicht, sodass die Lichtabstrahlung von einem Benutzer leicht erkannt werden kann. Dies kann beispielsweise durch mehrere entlang des Umfanges angeordnete LEDs und/oder die Verwendung von Lichtleitelementen, welche eine Richtung eines Lichtes ändern oder ein Licht streuen, einfach umgesetzt werden.

Eine Funktionalität des Ladekabels bzw. der Ladeeinrichtung kann zusätzlich dadurch vergrößert sein, dass das Ladekabel bzw. die Ladeeinrichtung zumindest ein Funkmodul aufweisen, um eine Kommunikation mit einem externen Gerät zu ermöglichen. Dadurch ist es etwa möglich, dass alternativ oder kumulativ ein Betriebszustand, Steuersignale, Benutzeridentifikationsdaten, Informationsdaten betreffend eine mit dem Ladekabel bzw. der Ladeeinrichtung verbundene Energieversorgungseinrichtung und/oder einen verbundenen aufzuladenden Energiespeicher an ein externes Gerät übermittelt werden bzw. von einem solchen empfangen werden. Hierzu kann das Funkmodul beispielsweise als WLAN-Modul, LTE-Modul oder Bluetooth-Modul ausgeführt sein, um eine Kommunikation mit einem externen Gerät einfach und mit wenig Aufwand umzusetzen. Insbesondere der Funkstandard Bluetooth Low Energy ist für eine derartige Kommunikation geeignet, da dieser eine Kommunikation mit besonders wenig Energieverbrauch ermöglicht. Das externe Gerät kann etwa ein Steuergerät in der Ladeinfrastruktur oder ein mobiles Gerät des Benutzers sein, wodurch ein Ladevorgang praktikabel kontrolliert und/oder gesteuert werden kann. Zweckmäßig ist das externe Gerät ein Mobiltelefon, welches ein Kommunizieren mit der Ladeeinrichtung auf einfache Weise, beispielsweise über ein dafür vorgesehenes Softwareprogramm am Mobiltelefon, ermöglicht. Der Ladevorgang kann dadurch benutzerfreundlich und praktikabel durch das externe Gerät kontrolliert und/oder gesteuert werden.

Vorteilhaft ist im Adapter bzw. dem Ladekabel zumindest ein Datenspeicher angeordnet, in welchem beispielsweise vorgenannte Daten gespeichert werden. Zweckmäßig ist ein solches Speicherelement derart ausgeführt, dass dieses im Rahmen einer Kommunikation mit einer Energieversorgungseinrichtung und/oder einem aufzuladenden Energiespeicher und/oder einem externen Gerät ausgelesen bzw. beschrieben werden kann.

Um eine Interaktion mit einem Benutzer zu erleichtern, ist vorteilhaft ein Bildschirm am Ladekabel bzw. am Adapter vorgesehen. Dadurch können einem Benutzer auf einfache Weise Informationen, beispielsweise betreffend einen Ladevorgang oder ein mit dem Ladekabel bzw. dem Adapter verbundenes Gerät mitgeteilt werden. Zweckmäßig ist außerdem eine Eingabemöglichkeit am Ladekabel bzw. am Adapter vorgesehen, um eine Interaktion mit dem Benutzer vorzusehen, beispielsweise über eine Touchbedienung. Besonders vorteilhaft ist der Bildschirm als Touchscreen ausgebildet, wodurch eine Interaktion mit dem Benutzer auf einfache Weise umgesetzt ist.

Es hat sich bewährt, dass der Adapter und die Adapterschnittstelle ohne Zwischenkabel miteinander verbunden sind. Dadurch ist die Ladeeinrichtung besonders robust und handlich ausgeführt.

Das weiteres Ziel wird erfindungsgemäß dadurch erreicht, dass bei einem Verfahren der eingangs genannten Art Steuersignale, die zwischen der Energieversorgungseinrichtung und einer Elektronik des Ladekabels und/oder des aufzuladenden Energiespeichers über das Ladekabel übertragen werden, drahtlos zwischen dem Adapter und der Adapterschnittstelle übertragen werden. Wie obig bereits dargelegt, wird durch eine drahtlose Übertragung der Steuersignale zwischen Adapter und Adapterschnittstelle erreicht, dass keine elektrischen Steuersignalkontakte zwischen Adapter und Adapterschnittstelle erforderlich sind, wodurch Adapter und Adapterschnittstelle besonders kompakt und mit einer ausgeprägten Widerstandsfähigkeit gegenüber mechanischen Belastungen und witterungsbedingten Einflüssen ausgestaltet werden können. Die reduzierte Größe der Ladeeinrichtung ermöglicht eine praktikable Handhabung der Ladeeinrichtung bei einem Herstellen einer Verbindung mit der Energieversorgungseinrichtung und dem aufzuladenden Energiespeicher. Durch die drahtlose Übertragung der Steuersignale zwischen Adapter und Adapterschnittstelle wird zudem eine gegenüber äußeren Einflüssen störungsunempfindliche Steuersignalübertragung zwischen Adapter und Adapterschnittstelle erreicht, wodurch eine beständige und verlässliche Kommunikation zwischen der Energieversorgungseinrichtung und dem aufzuladenden Energiespeicher sichergestellt ist.

Dabei ist es vorteilhaft, wenn eine Elektronikeinheit des Adapters mit Energie aus zumindest einem Steuersignalleiterkontakt des Adapters versorgt wird, wobei insbesondere eine Energie aus dem Steuersignalleiterkontakt zwischengespeichert wird, bis eine vordefinierte Energiemenge erreicht ist, wonach diese Elektronikeinheit die Energieversorgungseinrichtung dazu veranlasst mit einem Ladevorgang zu beginnen. Dies ist insbesondere bei einem elektrischen Laden an einer Energieversorgungseinrichtung zweckmäßig, welche vor dem Beginn des Ladevorganges eine Kommunikation bedingt. Die von der Energieversorgungseinrichtung über den zumindest einen Steuersignalleiterkontakt übertragenen Steuersignale können in solchen Fällen dazu verwendet werden, die Elektronikeinheit des Adapters mit Energie zu versorgen, wodurch diese in die Lage versetzt wird, mit der Energieversorgungseinrichtung zu kommunizieren und damit eine Übertragung des Ladestromes zu veranlassen. Wird ein Ladestrom übertragen, ist eine energetische Versorgung der gesamten Elektronik des Adapters bzw. eines an den Adapter angeschlossenen Ladekabels durch den übertragbaren Ladestrom ermöglicht.

Besonders bevorzugt wird eine Energieentnahme aus dem zumindest einem Steuersignalleiterkontakt bzw. aus den übertragenen Steuersignalen derart durchgeführt, dass eine Kommunikation mittels der über den zumindest einen Steuersignalleiterkontakt des Adapters übertragenen Steuersignale und eine energetische Versorgung der Elektronikeinheit des Adapters mit Energie aus dem zumindest einen Steuersignalleiterkontakt des Adapters gleichzeitig durchgeführt wird. Eine Energieentnahme aus einem Steuersignal führt dabei nicht zu einer Änderung eines Informationsgehaltes des Steuersignals, weshalb eine Kommunikation unbeeinflusst von der Energieentnahme durchgeführt werden kann.

Sind Ladekabel und zu diesen korrespondierende Adapter bzw. Ladeeinrichtungen für verschiedene elektrische Leistungsklassen bzw. für eine Übertragung von unterschiedlichen maximalen Ladeströmen vorgesehen, ist es zweckmäßig wenn die Adapterschnittstellen und/oder Adapter zumindest ein insbesondere konstruktives Merkmal aufweisen, welches ein Verbinden einer Adapterschnittstelle mit einem Adapter, der für eine andere elektrische Ladeleistung bzw. einen anderen maximalen Ladestrom ausgelegt ist, verhindert. Dadurch ist ein versehentliches Verbinden einer Adapterschnittstelle mit einem nicht für diese Adapterschnittstelle vorgesehenen Adapter unterbunden. Dies kann beispielsweise dadurch erfolgen, dass eine Adapterschnittstelle Stegelemente und Adapter derselben Leistungsklasse zu diesen Stegelementen korrespondierende Stegaufnahmen aufweisen. Adapter, welche für eine andere Leistungsklasse bzw. einen anderen maximalen Ladestrom ausgelegt sind, weisen diese Stegaufnahmen nicht auf, weshalb diese nicht mit der Adapterschnittstelle verbindbar sind. Entsprechend diesem Prinzip kann natürlich auch vorgesehen sein, dass eine Adapterschnittstelle Stegaufnahmen und die zugehörigen Adapter Stegelemente aufweisen. Damit ist ein versehentliches Verbinden eines Ladekabels mit einem Adapter, welcher für eine andere elektrische Ladeleistung bzw. einen anderen elektrischen Ladestrom ausgelegt ist, auf einfache Weise unterbunden.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 ein erfindungsgemäßes Ladekabel 1 sowie einen erfindungsgemäßen Adapter zum elektrischen Laden eines Elektrofahrzeuges;
Fig. 2 eine vergrößerte Ansicht der Adapterschnittstelle des Ladekabels 1 sowie des Adapters aus Fig. 1;
Fig. 3 eine Explosionsdarstellung eines erfindungsgemäßen Adapters sowie einer erfindungsgemäßen Adapterschnittstelle;
Fig. 4 ein erfindungsgemäßer Adapter in einer Ansicht, welche eine der Adapterschnittstelle zugewandte Seite eines Adapters zeigt;
Fig. 5 ein erfindungsgemäßer Adapter in einer Ansicht, welche eine einer Energieversorgungseinrichtung zugewandten Seite eines Adapters zeigt;

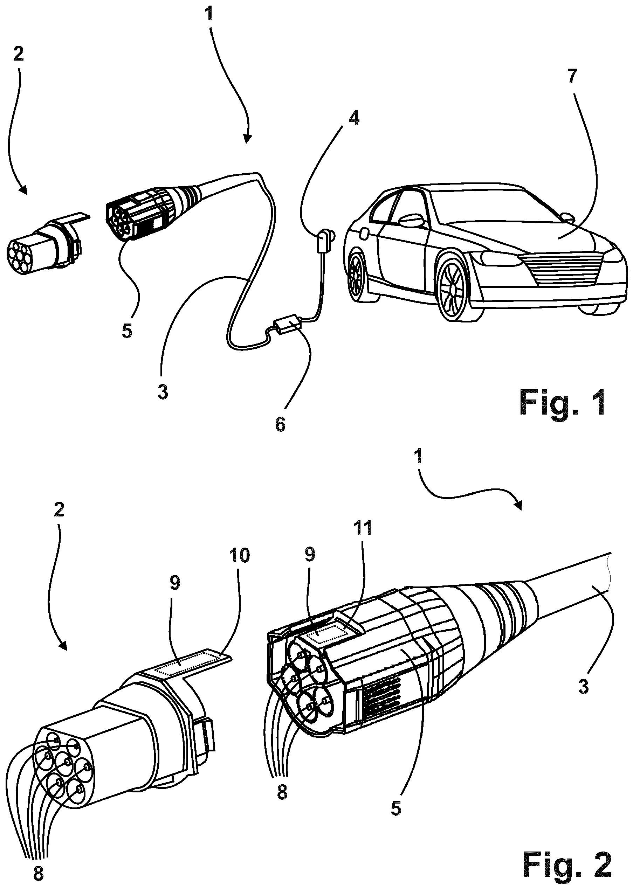

Fig. 1 zeigt ein erfindungsgemäßes Ladekabel 1 sowie einen erfindungsgemäßen Adapter 2 zum elektrischen Laden eines elektrischen Energiespeichers eines Elektroautos 7, um elektrische Energie bzw. einen Ladestrom von einer Energieversorgungseinrichtung an den Energiespeicher des Elektroautos 7 zu übertragen. Das Ladekabel 1 weist eine Ladeleitung 3 auf, welche einerseits mit einer Anschlussvorrichtung 4 mit dem Elektroauto 7 bzw. dem Energiespeicher des Elektroautos 7 lösbar elektrisch verbindbar ist und andererseits mit einer Adapterschnittstelle 5 elektrisch verbunden ist, welche mit dem Adapter 2 lösbar elektrisch verbindbar ist. Der Adapter 2 ist einerseits mit der Adapterschnittstelle 5 des Ladekabels 1 lösbar elektrisch verbindbar und andererseits mit der Energieversorgungseinrichtung, beispielsweise einer Steckdose, lösbar elektrisch verbindbar. Damit stellt der Adapter 2 ein austauschbares Zwischenstück dar, sodass je nach vorhandener Energieversorgungseinrichtung ein an die Energieversorgungseinrichtung angepasster Adapter 2 mit der Adapterschnittstelle 5 verbunden werden kann. Somit ist ein elektrisches Laden des Elektroautos 7 an unterschiedlichen Energieversorgungseinrichtungen mit nur einem Ladekabel 1 ermöglicht, indem ein passender Adapter 2 mit der Adapterschnittstelle 5 des Ladekabels 1 verbunden wird. In die Ladeleitung 3 des Ladekabels 1 ist zudem eine Regeleinrichtung 6 integriert, welche als sogenannte In-Cable-Control-Box ausgebildet ist. Die In-Cable-Control-Box steuert und/oder kontrolliert eine übertragene elektrische Energie bzw. einen übertragenen Ladestrom, um sicherzustellen, dass die übertragene elektrische Energie bzw. der Ladestrom entsprechend der Leistungsfähigkeit des Ladekabels 1 und/oder der Energieversorgungseinrichtung und/oder des Energiespeichers des Elektroautos 7 übertragen wird.

Sowohl der Adapter 2 als auch die Adapterschnittstelle 5 weisen Kommunikationseinrichtungen auf, sodass Steuersignale die zwischen der Energieversorgungseinrichtung einerseits und einer Elektronik des Ladekabels 1 und/oder des Elektroautos 7 andererseits über das Ladekabel 1 bzw. den Adapter 2 übertragen werden, drahtlos zwischen dem Adapter 2 und der Adapterschnittstelle 5 übertragbar sind. Indem die Steuersignale nicht über zusätzliche elektrische Kontakte 8 zwischen dem Adapter 2 und der Adapterschnittstelle 5 übertragen werden, können der Adapter 2 und die Adapterschnittstelle 5 robust und kompakt ausgebildet sein, was einerseits eine Handhabung und einen Transport derselben erleichtert, und zudem eine störungsunempfindliche Kommunikation bzw. Übertragung der Steuersignale zwischen dem Adapter 2 und der Adapterschnittstelle 5 ermöglicht. Die Kommunikationseinrichtungen des Adapters 2 und der Adapterschnittstelle 5 sind als RFID-System ausgebildet, um die Steuersignale drahtlos, auf Basis einer bidirektionalen Near-Field-Communication (NFC), zu übertragen. Durch die geringe Größe des RFID-Systems ist dieses ohne wesentliche Auswirkungen auf eine Kompaktheit und/oder Haltbarkeit in den Adapter 2 und die Adapterschnittstelle 5 integrierbar.

Fig. 2 zeigt eine vergrößerte Ansicht des in Fig. 1 darstellten Adapters 2 und der Adapterschnittstelle 5 des Ladekabels 1. Adapter 2 und Adapterschnittstelle 5 sind derart ausgeführt, dass diese formschlüssig und reibschlüssig aneinander gesteckt werden können, wodurch eine haltbare mechanische Verbindung zwischen Adapter 2 und Adapterschnittstelle 5 bzw. zwischen deren elektrischen Kontakten 8 sichergestellt ist. Die Adapterschnittstelle 5 weist fünf elektrische Kontakte 8 auf, wobei drei elektrische Kontakte 8 als Phasenkontakte, ein elektrischer Kontakt 8 als Neutralleiterkontakt und ein elektrischer Kontakt 8 als Schutzleiterkontakt ausgeführt sind. Die Phasenkontakte und der Neutralleiterkontakt sind vorgesehen, um eine Übertragung eines Ladestromes, insbesondere eines Dreiphasenwechselstromes, zu ermöglichen. Der Schutzleiterkontakt dient der Sicherheit und sorgt für einen Potentialausgleich gegenüber einem Erdpotential.

Die fünf elektrischen Kontakte 8 der Adapterschnittstelle 5 sind mit korrespondierenden elektrischen Kontakten 8 am Adapter 2 lösbar elektrisch verbindbar und somit ein sicheres elektrisches Laden bzw. eine sichere elektrische Energieübertragung über eine durch Adapter 2 und Ladekabel 1 gebildete Energieversorgungseinrichtung ermöglicht.

Der Adapter 2 ist auf der einer Energieversorgungseinrichtung zugewandten Seite als IEC 62169 Typ 2 Stecker ausgebildet und weist sieben elektrische Kontakte 8 auf, wobei fünf elektrische Kontakte 8 mit den elektrischen Kontakten 8 der Adapterschnittstelle 5 lösbar elektrisch verbindbar sind. Die zwei weiteren elektrischen Kontakte 8 sind als Steuersignalleiterkontakte ausgeführt und dienen einer Steuersignalübertragung bzw. Kommunikation zwischen der Energieversorgungseinrichtung und einer Elektronik des Ladekabels 1 und/oder des Elektroautos 7. Die beiden Steuersignalleiterkontakte werden im Rahmen der Kommunikation zwischen der Energieversorgungseinrichtung und dem Elektroauto 7 auch als Proximity-Pilot-Kontakt und Control-Pilot-Kontakt bezeichnet.

Die Kommunikationseinrichtungen des Adapters 2 und der Adapterschnittstelle 5 sind in Form von sogenannten NFC-Platinen 9 ausgebildet, welche die bidirektionale Near-Field-Communication zwischen dem Adapter 2 und Adapterschnittstelle 5 umsetzen. Hierzu sind die Steuersignalleiterkontakte sowie auch der Schutzleiterkontakt des Adapters 2 elektrisch mit der NFC-Platine 9 des Adapters 2 verbunden, um Steuersignale zwischen der Energieversorgungseinrichtung und der NFC-Platine 9 des Adapters 2 zu übertragen.

Üblicherweise werden die Steuersignale dabei durch Spannungsdifferenzen, welche zwischen einem der Steuersignalleiterkontakte und dem Schutzleiterkontakt anliegen, hergestellt bzw. übermittelt.

Da die Near-Field-Communication auf eine Kommunikation im Nahbereich limitiert ist, sind die NFC-Platine 9 im Adapter 2 und die NFC-Platine 9 in der Adapterschnittstelle 5 derart angeordnet, dass diese bei an die Adapterschnittstelle 5 angestecktem Adapter 2 einen möglichst geringen Abstand aufweisen. Hierzu weist der Adapter 2 ein Führungselement 10 auf, welches bei einem Verbinden von Adapter 2 und Adapterschnittstelle 5 in eine korrespondierende Führungselementaufnahme 11 an der Adapterschnittstelle 5 einfügbar ist, welche als Vertiefung in die Oberfläche der Adapterschnittstelle 5 eingebracht ist. Indem die NFC-Platine 9 des Adapters 2 in das Führungselement 10 des Adapters 2 und die NFC-Platine 9 der Adapterschnittstelle 5 in die Oberfläche der Führungselementaufnahme 11 der Adapterschnittstelle 5 integriert sind, wird ein geringer Abstand zwischen den NFC-Platinen 9 im verbundenen Zustand und damit eine sichere Kommunikation erreicht.

Um ein Laden an einer Ladestation zu ermöglichen, welche vor einer Übertragung des Ladestromes eine Kommunikation zwischen der Ladestation und dem Elektroauto 7 erfordert, ist im dargestellten IEC 62169 Typ 2 Stecker eine Elektronikeinheit angeordnet, welche mit Energie aus zumindest einem der Steuersignalleiterkontakte des Adapters 2 energetisch versorgbar ist. Damit ist eine Basisfunktionalität des Adapters 2, ohne zusätzliche energetische Versorgung, nur mittels der übertragenen Steuersignale gegeben. Insbesondere wird dadurch eine Kommunikation zwischen der Ladestation und der Elektronikeinheit des Adapters 2 ermöglicht, um die Übertragung des Ladestromes zu veranlassen. Zweckmäßig ist diese Kommunikation dadurch umgesetzt, dass bei einer Erfassung von vorbestimmten von der Ladestation an den Adapter 2 übertragenen Steuersignalen ein elektrischer Widerstand im Adapter 2 geändert wird.

Bei einem mittels eines IEC 62169 Typ 2 Steckers mit einer Ladestation verbundenen Elektroautos 7 erfolgt diese Kommunikation üblicherweise dadurch, dass die Ladestation zwischen den Control-Pilot-Kontakt und den Schutzleiterkontakt sowie zwischen den Proximity-Pilot-Kontakt und den Schutzleiterkontakt vordefinierte Spannungen anlegt. Durch die Variation von elektrischen Widerständen kann das Elektroauto 7 definierte Spannungsabfälle in den angelegten Spannungen erzeugen und dadurch mit der Ladestation kommunizieren und beispielsweise einen Bereitschaftszustand bzw. einen maximalen Ladestrom übermitteln.

Indem die Elektronikeinheit des Adapters 2 diese Spannungsabfälle in den Signalen des Control-Pilot-Kontakts und des Proximity-Pilot-Kontakts erzeugt, wird vorgegeben, dass ein bestimmtes Elektrofahrzeug an die Ladestation angeschlossen sei und damit eine Ladestromfreigabe veranlasst. Der Adapter 2 bzw. die Elektronikeinheit des Adapters 2 simuliert damit, unter Nutzung der über zumindest einen der Steuersignalleiterkontakte gewonnenen Energie, gegenüber der Ladestation ein angeschlossenes Elektrofahrzeug wäre an die Ladestation angeschlossen, wodurch die Ladestation den Ladestrom überträgt.

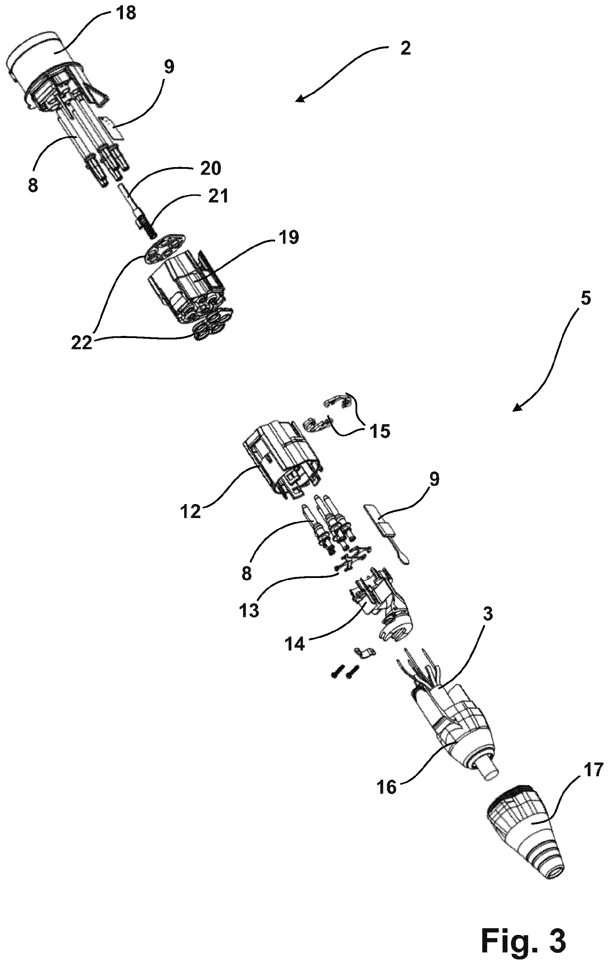

Fig. 3 zeigt eine Explosionsdarstellung der Adapterschnittstelle 5 sowie eines erfindungsgemäßen Adapters 2. Die Adapterschnittstelle 5 umfasst ein Adapterschnittstellengehäuse 12, in welches die elektrischen Kontakte 8 der Adapterschnittstelle 5 in Form von Kontaktstiften eingefügt sind. Diese werden mittels eines Kabelhalters 14 über eine Zugentlastung mit einem Bügel mit elektrischen Leitungen der Ladeleitung 3 verbunden. Weiter ersichtlich ist die NFC-Platine 9 der Adapterschnittstelle 5, welche als flaches Element ausgeformt ist, und in das Adapterschnittstellengehäuse 12 unter die Führungselementaufnahme 11 integriert ist. Des Weiteren dargestellt sind zwei Lichtleiterelemente 15, welche das von einem im Adapterschnittstellengehäuse 12 angeordneten Leuchtelement emittierte Licht nach außen leiten. Das Leuchtelement signalisiert dabei einem Benutzer einen Betriebszustand des Ladekabels 1. Ersichtlich ist außerdem ein in der Adapterschnittstelle 5 angeordnetes Elektronikelement 13, um beispielsweise eine Regelung und Steuerung von zumindest einem oder mehreren im Ladekabel 1 oder im Adapter 2 angeordneten Leuchtelementen, Temperatursensoren, Magnetsensoren und/oder weiteren im Ladekabel 1 und/oder im Adapter angeordneten Sensoreinrichtungen durchzuführen. Darstellt ist weiter ein Kabelgehäuseinnenteil 16, welches durch ein Kabelgehäuseaußenteil 17 mit dem Adapterschnittstellengehäuse 12 verbunden ist, wodurch die Einzelteile der Adapterschnittstelle 5 von einem robusten Gehäuse umgeben sind.

Der in Fig. 3 dargestellte Adapter 2 umfasst einerseits ein Adapteraußenteil 18, welches zum Verbinden mit einer Energieversorgungseinrichtung ausgebildet ist und andererseits ein Adapterinnenteil 19, welches für ein für ein Verbinden mit der Adapterschnittstelle 5 ausgebildet ist. In das Adapteraußenteil 18 und das Adapterinnenteil sind elektrische Kontakte 8 in Form von Kontaktstiften eingefügt. Weiter ersichtlich ist eine in den Adapter 2 integrierte NFC-Platine 9, um eine drahtlose Kommunikation mit der Adapterschnittstelle 5 umzusetzen. Außerdem dargestellt ist ein Tastelement 20, um ein Lösen des Adapters 2 von der Energieversorgungseinrichtung sowie ein Lösen des Adapters 2 von der Adapterschnittstelle 5 zu erfassen. Hierzu weist das Tastelement 20 an dessen der Adapterschnittstelle 5 zugewandten Seite einen magnetischen Bereich auf, dessen Position bzw. Bewegung von einem Magnetsensor in der Adapterschnittstelle 5 detektierbar ist. Das Tastelement 20 ist mit einer Feder 21 belastet und wird bei einem Verbinden des Adapters 2 mit der Energieversorgungseinrichtung entgegen einer wirkenden Federkraft in eine am Adapterinnenteil 19 angeordnete Tastelementaufnahme geschoben bzw. innerhalb der Tastelementaufnahme verschoben. Wird der Adapter 2 von der Energieversorgungseinrichtung oder von der Adapterschnittstelle 5 gelöst, führt dies zu einer Vergrößerung des Abstandes zwischen dem magnetischen Bereich des Tastelementes 20 und dem Magnetsensor der Adapterschnittstelle 5. Dies wird vom Magnetsensor detektiert, womit ein Lösen der Verbindung zwischen einer Energieversorgungseinrichtung und dem Adapter 2 sowie auch ein Lösen der Verbindung zwischen dem Adapter 2 und der Adapterschnittstelle 5 erkennbar ist und eine Überwachung eines betriebsgemäßen Anschlusses des Adapters 2 bzw. des Ladekabels 1 an die Energieversorgungseinrichtung umgesetzt ist. Zudem dargestellt sind zwei Dichtungselemente 22, welche zum Schutz gegen Feuchtigkeit zwischen Adapteraußenteil 18 und Adapterinnenteil 19 sowie an einer der Adapterschnittstelle 5 zugewandten Außenseite des Adapterinnenteiles 19 angeordnet ist.

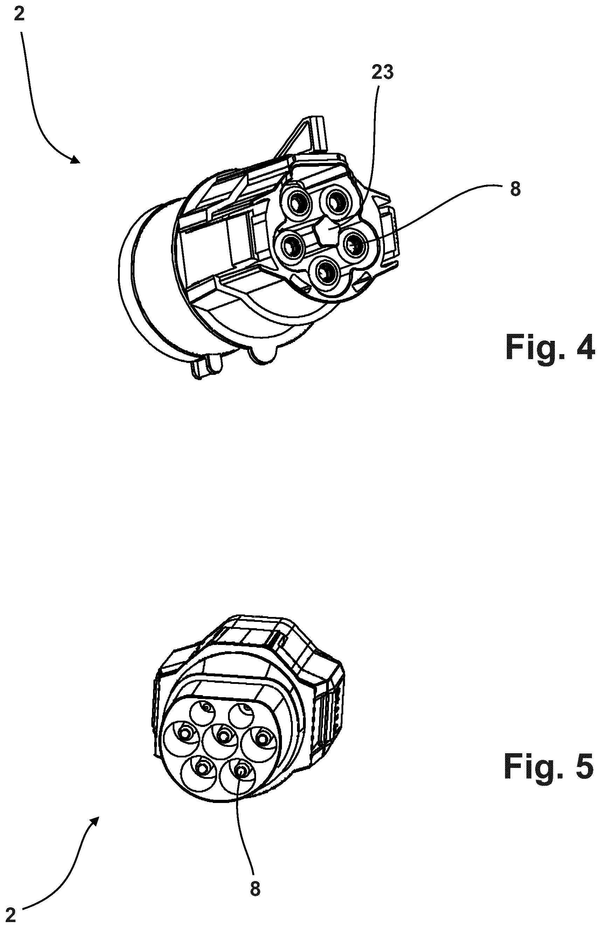

Fig. 4 zeigt einen erfindungsgemäßen Adapter 2 in einer Ansicht, welche eine der Adapterschnittstelle 5 zugewandte Seite des Adapters 2 zeigt. Ersichtlich sind fünf elektrische Kontakte 8, welche mit korrespondieren elektrischen Kontakten 8 an der zuvor dargestellten Adapterschnittstelle 5 verbindbar sind. Weiter ersichtlich ist ein stabförmiges Element 23, welches zwischen den elektrischen Kontakten 8 angeordnet ist. Dieses stellt die Außenoberfläche der im Adapterinnenteil 19 angeordneten Tastelementaufnahme dar, in welche das in Fig. 3 dargestellte federbelastete Tastelement 20 bei einem Verbinden des Adapters 2 mit einer Energieversorgungseinrichtung geschoben bzw. innerhalb derer das Tastelement 20 verschoben wird.

Fig. 5 zeigt eine weitere Variante eines Adapters 2 in einer der Energieversorgungseinrichtung zugewandten Ansicht. Ersichtlich sind sieben elektrische Kontakte 8, wobei fünf elektrische Kontakte 8 zur elektrischen Verbindung mit einer Adapterschnittstelle 5 vorgesehen sind und zwei elektrische Kontakte 8 als Steuersignalleiterkontakte ausgebildet sind. Die beiden Steuersignalleiterkontakte sind elektrisch mit der Kommunikationseinrichtung des Adapters 2 verbunden, um Steuersignale drahtlos an die Kommunikationseinrichtung des Adapters 2 zu übertragen.

Ein erfindungsgemäßes Ladekabel 1 und ein erfindungsgemäßer Adapter 2 sowie entsprechend eine erfindungsgemäße Ladeeinrichtung ermöglichen ein praktikables elektrisches Laden eines Elektroautos 7 an unterschiedlichen

Energieversorgungseinrichtungen, indem ein zur vorhandenen Energieversorgungseinrichtung passender Adapter 2 an das Ladekabel 1 angesteckt wird. Dadurch, dass Steuersignale die zwischen der Energieversorgungseinrichtung und einer Elektronik des Ladekabels 1 und/oder des Elektroautos 7 über das Ladekabel 1 übertragen werden, drahtlos zwischen dem Adapter 2 und der Adapterschnittstelle 5 durch eine bidirektionaler Near-Field-Communication übertragen werden, können Adapterschnittstelle 5 sowie Adapter 2 kompakt und robust ausgebildet sein und kann gleichzeitig eine verlässliche und störungsunempfindliche Kommunikation mittels der Steuersignale umgesetzt werden. Durch die Übertragung der Steuersignale mit bidirektionaler Near-Field-Communication ist eine hohe Sicherheit der Kommunikation gewährleistet, da diese auf einen räumlich limitierten Bereich beschränkt ist.

Ein praktikables elektrisches Laden des Elektroautos 7 ist damit sowohl an Energieversorgungseinrichtungen möglich, welche eine Kommunikation durch eine Übertragung von Steuersignalen erfordern, als auch ein elektrisches Laden an üblichen ein oder mehrphasigen Normsteckdosen weiterhin praktikabel sichergestellt.

## Patentansprüche

1. Ladekabel (1), insbesondere zum elektrischen Laden eines Elektrofahrzeuges, aufweisend eine Ladeleitung (3), welche einerseits mit einer Anschlussvorrichtung (4) mit einem aufzuladenden Energiespeicher lösbar elektrisch verbindbar ist und andererseits mit einer Adapterschnittstelle (5) elektrisch verbunden ist, welche mit einem Adapter (2) formschlüssig lösbar verbindbar ist, wobei der Adapter (2) mit einer Energieversorgungseinrichtung lösbar elektrisch verbindbar ist, um elektrische Energie von der Energieversorgungseinrichtung über das Ladekabel (1) an den aufzuladenden Energiespeicher zu übertragen, **dadurch gekennzeichnet, dass** die Adapterschnittstelle (5) eine Kommunikationseinrichtung aufweist, welche eine drahtlose Kommunikation mit dem eine entsprechende Kommunikationseinrichtung aufweisenden Adapter (2) ermöglicht, wenn der Adapter (2) mit der Adapterschnittstelle (5) verbunden ist, sodass Steuersignale zwischen der Energieversorgungseinrichtung einerseits und einer Elektronik des Ladekabels (1) und/oder eines an das Ladekabel (1) angeschlossenen Energiespeichers andererseits zwischen dem Adapter (2) und der Adapterschnittstelle (5) drahtlos übertragbar sind.

2. Ladekabel (1) nach Anspruch 1, **dadurch gekennzeichnet, dass** das Ladekabel (1) eine Regeleinrichtung (6) aufweist, um die übertragene elektrische Energie zu steuern und/oder zu kontrollieren.

3. Ladekabel (1) nach Anspruch 1 oder 2, **dadurch gekennzeichnet, dass** die Adapterschnittstelle (5) zumindest fünf elektrische Kontakte (8) aufweist, welche mit elektrischen Kontakten (8) am Adapter (2) lösbar elektrisch verbindbar sind.

4. Adapter (2) für ein Ladekabel (1), insbesondere ein Ladekabel (1) nach einem der Ansprüche 1 bis 3, welcher einerseits mit einer Adapterschnittstelle (5) des Ladekabels (1) formschlüssig lösbar verbindbar ist und andererseits mit einer Energieversorgungseinrichtung lösbar elektrisch verbindbar ist, um elektrische Energie von der Energieversorgungseinrichtung über den Adapter (2) an das Ladekabel (1) zu übertragen, **dadurch gekennzeichnet, dass** der Adapter (2) eine Kommunikationseinrichtung aufweist, welche eine drahtlose Kommunikation mit der eine entsprechende Kommunikationseinrichtung aufweisenden Adapterschnittstelle (5) ermöglicht, wenn der Adapter (2) mit der Adapterschnittstelle (5) verbunden ist, sodass Steuersignale zwischen der Energieversorgungseinrichtung einerseits und einer Elektronik des Ladekabels (1) und/oder eines an das Ladekabel (1) angeschlossenen Energiespeichers andererseits drahtlos zwischen dem Adapter (2) und der Adapterschnittstelle (5) übertragbar sind.

5. Adapter (2) nach Anspruch 4, **dadurch gekennzeichnet, dass** der Adapter (2) zumindest fünf elektrische Kontakte (8), welche mit elektrischen Kontakten an der Adapterschnittstelle (5) lösbar elektrisch verbindbar sind, sowie zumindest einen weiteren elektrischen Steuersignalleiterkontakt aufweist, welcher zur Übertragung von Steuersignalen mit der Kommunikationseinrichtung des Adapters (2) elektrisch verbunden ist.

6. Adapter (2) nach einem der Ansprüche 4 oder 5, **dadurch gekennzeichnet, dass** eine Elektronikeinheit des Adapters (2) mit Energie aus zumindest einem Steuersignalleiterkontakt des Adapters (2) energetisch versorgbar ist, wobei insbesondere eine Energie aus dem Steuersignalleiterkontakt zwischengespeichert wird, bis eine vordefinierte Energiemenge erreicht ist, um eine Kommunikation zwischen der Energieversorgungseinheit und der Elektronikeinheit des Adapters (2) zu ermöglichen, und dadurch die Übertragung eines Ladestromes zu veranlassen.

7. Ladeeinrichtung zum elektrischen Laden eines Energiespeichers an einer Energieversorgungseinrichtung, insbesondere zum elektrischen Laden eines Elektrofahrzeugens, umfassend ein Ladekabel (1) nach einem der Ansprüche 1 bis 3 sowie einen Adapter (2) nach einem der Ansprüche 4 bis 6.

8. Ladeeinrichtung nach Anspruch 7, **dadurch gekennzeichnet, dass** die Kommunikationseinrichtungen im Adapter (2) und in der Adapterschnittstelle (5) als RFID-System ausgebildet sind, um die Steuersignale zwischen dem Adapter (2) und der Adapterschnittstelle (5) zu übertragen.

9. Ladeeinrichtung nach Anspruch 7 oder 8, **dadurch gekennzeichnet, dass** die Steuersignale zwischen Adapter (2) und Adapterschnittstelle (5) mittels elektromagnetischer Induktion, insbesondere in einem Frequenzbereich von 10 MHz bis 15 MHz, bevorzugt bei etwa 13,56 MHz, übertragbar sind.

10. Ladeeinrichtung nach einem der Ansprüche 7 bis 9, **dadurch gekennzeichnet, dass** der Adapter (2) eine Kodierung aufweist, welche bei an die Adapterschnittstelle (5) angestecktem Adapter (2) von der Adapterschnittstelle (5) erkennbar ist, um die übertragene elektrische Energie entsprechend der Kodierung zu regeln.

11. Ladeeinrichtung nach einem der Ansprüche 7 bis 10, **dadurch gekennzeichnet**, ein Verbinden bzw. Lösen des Adapters (2) mit bzw. von der Energieversorgungseinrichtung und/oder ein Verbinden bzw. Lösen des Adapters (2) mit bzw. von der Adapterschnittstelle (5) und/oder ein Verbinden bzw. Lösen des Ladekabels (1) mit bzw. von dem aufzuladenden Energiespeicher durch zumindest eine Sensoreinrichtung im Ladekabel (1) und/oder im Adapter (2) erkennbar ist.

12. Ladeeinrichtung nach einem der Ansprüche 7 bis 11 Anspruch, **dadurch gekennzeichnet, dass** der Adapter (2) ein Tastelement aufweist, welches bei einem Verbinden des Adapters (2) mit der Energieversorgungseinrichtung mit einer Kraft beaufschlagt und/oder bewegt wird, und eine Sensoreinheit im Adapter (2) oder der Adapterschnittstelle (5) angeordnet ist, um eine Kraftbeaufschlagung und/oder Bewegung und/oder Position des Tastelementes zu detektieren.

13. Verfahren zum elektrischen Laden eines Energiespeichers, insbesondere eines Energiespeichers eines Elektrofahrzeuges, an einer Energieversorgungseinrichtung, mit einer Ladeeinrichtung, insbesondere einer Ladeinrichtung nach einem der Ansprüche 7 bis 12, aufweisend eine Ladeleitung (3), welche einerseits mit einer Anschlussvorrichtung (4) mit dem aufzuladenden Energiespeicher lösbar elektrisch verbunden wird und andererseits über einen formschlüssig lösbar mit einer Adapterschnittstelle (5) verbundenen Adapter (2) mit der Energieversorgungseinrichtung lösbar elektrisch verbunden wird, **dadurch gekennzeichnet, dass** Steuersignale, die zwischen der Energieversorgungseinrichtung und einer Elektronik des Ladekabels (1) und/oder des aufzuladenden Energiespeichers über das Ladekabel (1) übertragen werden, drahtlos zwischen dem Adapter (2) und der Adapterschnittstelle (5) übertragen werden.

14. Verfahren nach Anspruch 13, **dadurch gekennzeichnet, dass** eine Elektronikeinheit des Adapters (2) mit Energie aus zumindest einem Steuersignalleiterkontakt des Adapters (2) versorgt wird, wobei insbesondere eine Energie aus dem Steuersignalleiterkontakt zwischengespeichert wird, bis eine vordefinierte Energiemenge erreicht ist, wonach diese Elektronikeinheit die Energieversorgungseinrichtung dazu veranlasst mit einem Ladevorgang zu beginnen.

15. Verfahren nach Anspruch 14, **dadurch gekennzeichnet, dass** eine Kommunikation mittels der über den zumindest einen Steuersignalleiterkontakt des Adapters (2) übertragenen Steuersignale und eine energetische Versorgung der Elektronikeinheit des Adapters (2) mit Energie aus dem zumindest einen Steuersignalleiterkontakt des Adapters (2) gleichzeitig durchgeführt wird.

## Claims

1. Charging cable (1), in particular for electrically charging an electric vehicle, having a charging wire (3), which, on the one hand, is detachably electrically connected using a connection device (4) to an energy storage device to be charged and, on the other hand, is electrically connected to an adapter interface (5) which can be connected in a positive-locking manner to an adapter (2), the adapter (2) being detachably electrically connectable to an energy supply device, in order to transfer electrical energy from the energy supply device via the charging cable (1) to the energy storage device to be charged, **characterized in that** the adapter interface (5) has a communication device which allows a wireless communication with the adapter (2) having an appropriate communication device when the adapter (2) is connected to the adapter interface (5), so that control signals between the energy supply device, on the one hand, and an electronics of the charging cable (1) and/or an energy storage device connected to the charging cable (1), on the other hand, can be wirelessly transferred between the adapter (2) and the adapter interface (5).

2. Charging cable (1) according to Claim 1, **characterized in that** the charging cable (1) has a control device (6), in order to control and/or monitor the electrical energy transferred.

3. Charging cable (1) according to Claim 1 or 2, **characterized in that** the adapter interface (5) has at least five electrical contacts (8), which can be detachably electrically connected to electrical contacts (8) on the adapter (2).

4. Adapter (2) for a charging cable (1), in particular a charging cable (1) according to any one of Claims 1 to 3, which, on the one hand, can be detachably connected in a positive-locking manner to an adapter interface (5) of the charging cable (1) and on the other hand, can be detachably electrically connected to an energy supply device in order to transfer electrical energy from the energy supply device via the adapter (2) to the charging cable (1), **characterized in that** the adapter (2) has a communication device which allows a wireless communication with the adapter interface (5) having an appropriate communication device when the adapter (2) is connected to the adapter interface (5), so that control signals between the energy supply device, on the one hand, and an electronics of the charging cable (1) and/or an energy storage device which is connected to the charging cable (1), on the other hand, can be wirelessly transferred between the adapter (2) and the adapter interface (5).

5. Adapter (2) according to Claim 4, **characterized in that** the adapter (2) has at least five electrical contacts (8) that can be detachably electrically connected to electrical contacts on the adapter interface (5), and has at least one further electrical control signal conductor contact, which is electrically connected to the communication device of the adapter (2) for transferring control signals.

6. Adapter (2) according to either of Claims 4 or 5, **characterized in that** an electronics unit of the adapter (2) can be supplied with power using energy from at least one control signal conductor contact of the adapter (2), wherein in particular, energy from the control signal conductor contact is temporarily stored until a predefined amount of energy is reached in order to enable communication between the energy supply unit and the electronics unit of the adapter (2), and thereby to initiate the transfer of a charging current.

7. Charging device for electrically charging an energy storage device on an energy supply device, in particular for electrically charging an electric vehicle, comprising a charging cable (1) according to any one of Claims 1 to 3 and an adapter (2) according to any one of Claims 4 to 6.

8. Charging device according to Claim 7, **characterized in that** the communication devices in the adapter (2) and in the adapter interface (5) are designed as an RFID system in order to transfer the control signals between the adapter (2) and the adapter interface (5).

9. Charging device according to Claim 7 or 8, **characterized in that** the control signals can be transferred between the adapter (2) and adapter interface (5) by means of electromagnetic induction, in particular in a frequency range from 10 MHz to 15 MHz, preferably at approximately 13.56 MHz.

10. Charging device according to any one of Claims 7 to 9, **characterized in that** the adapter (2) has an encoding which can be detected by the adapter interface (5) when the adapter (2) is plugged into the adapter interface (5), in order to control the transferred electrical energy in accordance with the encoding.

11. Charging device according to any one of Claims 7 to 10, **characterized in that** a connection or disconnection of the adapter (2) to or from the energy supply device and/or a connection or disconnection of the adapter (2) to or from the adapter interface (5) and/or a connection or disconnection of the charging cable (1) to or from the energy storage device to be charged can be detected by at least one sensor device in the charging cable (1) and/or in the adapter (2).

12. Charging device according to any one of Claims 7 to 11, **characterized in that** the adapter (2) has a sensing element, which upon connection of the adapter (2) to the energy supply device has a force applied thereto and/or is moved, and a sensor unit is arranged in the adapter (2) or the adapter interface (5) to detect a force application and/or movement and/or position of the sensing element.

13. Method for electrically charging an energy storage device, in particular an energy storage device of an electric vehicle, on an energy supply device, with a charging device, in particular a charging device according to any one of Claims 7 to 12, having a charging wire (3), which on the one hand, is detachably electrically connected using a connection device (4) to the energy storage device to be charged and, on the other hand, detachably electrically connected to the energy supply device via an adapter (2), which is detachably connected in a positive-locking manner to an adapter interface (5), **characterized in that** control signals, which are transmitted via the charging cable (1) between the energy supply device and a set of electronics of the charging cable (1) and/or of the energy storage device to be charged, are transmitted wirelessly between the adapter (2) and the adapter interface (5).

14. Method according to Claim 13, **characterized in that** an electronics unit of the adapter (2) is supplied with energy from at least one control signal conductor contact of the adapter (2), wherein in particular, energy from the control signal conductor contact is temporarily stored until a predefined amount of energy is reached, after which this electronics unit causes the energy supply device to begin a charging operation.

15. Method according to Claim 14, **characterized in that** a communication by means of the control signals transferred via the at least one control signal conductor contact of the adapter (2) and a supply of power for the electronics unit of the adapter (2) with energy from the at least one control signal conductor contact of the adapter (2) is carried out at the same time.

## Revendications

1. Câble chargeur (1), destiné notamment à charger électriquement un véhicule électrique, comportant une ligne de charge (3), laquelle est susceptible d'une part d'être électriquement connectée de manière amovible sur un dispositif de raccordement (4) pourvu d'un accumulateur d'énergie qui doit être chargé et d'autre part est électriquement connectée sur une interface adaptatrice (5), laquelle est susceptible d'être connectée de manière amovible par complémentarité de forme sur un adaptateur (2), l'adaptateur (2) étant susceptible d'être électriquement connecté de manière amovible sur un système d'alimentation en énergie, pour transmettre de l'énergie électrique du système d'alimentation en énergie par l'intermédiaire du câble chargeur (1) sur l'accumulateur d'énergie qui doit être chargé, **caractérisé en ce que** l'interface adaptatrice (5) comporte un système de communication, lequel permet une communication sans fil avec l'adaptateur (2) comportant un système de communication adéquat lorsque l'adaptateur (2) est connecté sur l'interface adaptatrice (5), de sorte que des signaux de commande entre le système d'alimentation en énergie d'une part et une électronique du câble chargeur (1) et/ou d'un accumulateur d'énergie connecté sur le câble chargeur (1) d'autre part soient transmissibles sans fil entre l'adaptateur (2) et l'interface adaptatrice (5).

2. Câble chargeur (1) selon la revendication 1, **caractérisé en ce que** le câble chargeur (1) comporte un système de réglage (6), destiné à commander et/ou à contrôler l'énergie électrique transmise.

3. Câble chargeur (1) selon la revendication 1 ou 2, **caractérisé en ce que** l'interface adaptatrice (5) comporte au moins cinq contacts électriques (8), lesquels sont susceptibles d'être connectés électriquement de manière amovible sur des contacts électriques (8) sur l'adaptateur (2).

4. Adaptateur (2), destiné à un câble chargeur (1), notamment à un câble chargeur (1) selon l'une quelconque des revendications 1 à 3, lequel d'une part est susceptible d'être connecté de manière amovible par complémentarité de forme sur une interface adaptatrice (5) du câble chargeur (1) et d'autre part est susceptible d'être connecté électriquement de manière amovible sur un système d'alimentation en énergie, pour transmettre l'énergie électrique du système d'alimentation en énergie par l'intermédiaire de l'adaptateur (2) sur le câble chargeur (1), **caractérisé en ce que** l'adaptateur (2) comporte un système de communication, lequel permet une communication sans fil avec l'interface adaptatrice (5) comportant un système de communication adéquat, lorsque l'adaptateur (2) est connecté sur l'interface adaptatrice (5), de sorte que des signaux de commande entre le système d'alimentation en énergie d'une part et une électronique du câble chargeur (1) et/ou d'un accumulateur d'énergie connecté sur le câble chargeur (1) d'autre part soient transmissible sans fil entre l'adaptateur (2) et l'interface adaptatrice (5).

5. Adaptateur (2) selon la revendication 4, **caractérisé en ce que** l'adaptateur (2) comporte au moins cinq contacts électriques (8), lesquels sont susceptibles d'être électriquement connectés de manière amovible sur des contacts électriques sur l'interface adaptatrice (5), ainsi qu'au moins un contact de conducteur de signaux de commande supplémentaire, lequel pour transmettre des signaux de commande est électriquement connecté sur le système de communication de l'adaptateur (2).

6. Adaptateur (2) selon l'une quelconque des revendications 4 ou 5, **caractérisé en ce qu'**un ensemble électronique de l'adaptateur (2) est susceptible d'être alimenté énergétiquement avec de l'énergie provenant d'au moins un contact de conducteur de signaux de commande de l'adaptateur (2), notamment une énergie provenant du contact de conducteur de signaux de commande étant temporairement accumulée jusqu'à ce qu'une quantité d'énergie prédéfinie soit atteinte, pour permettre une communication entre l'ensemble d'alimentation en énergie et l'ensemble électronique de l'adaptateur (2) et initier de ce fait la transmission d'un courant de charge.

7. Dispositif de chargement, destiné à charger électriquement un accumulateur d'énergie sur un système d'alimentation en énergie, notamment à charger électriquement un véhicule électrique, comprenant un câble chargeur (1) selon l'une quelconque des revendications 1 à 3, ainsi qu'un adaptateur (2) selon l'une quelconque des revendications 4 à 6.

8. Dispositif de chargement selon la revendication 7, **caractérisé en ce que** les systèmes de communication dans l'adaptateur (2) et dans l'interface adaptatrice (5) sont conçus sous la forme de système RFID, pour transmettre les signaux de commande entre l'adaptateur (2) et l'interface adaptatrice (5).

9. Dispositif de chargement selon la revendication 7 ou 8, **caractérisé en ce que** les signaux de commande sont transmissibles entre l'adaptateur (2) et l'interface adaptatrice (5) par induction électromagnétique, notamment dans une gamme de fréquences de 10 MHz à 15 MHz, de préférence à environ 13,56 MHz.

10. Dispositif de chargement selon l'une quelconque des revendications 7 à 9, **caractérisé en ce que** l'adaptateur (2) comporte un codage, lequel lorsque l'adaptateur (2) est branché sur l'interface adaptatrice (5) est identifiable par l'interface adaptatrice (5) pour régler l'énergie électrique transmise en fonction du codage.

11. Dispositif de chargement selon l'une quelconque des revendications 7 à 10, **caractérisé en ce qu'**une connexion ou une désolidarisation de l'adaptateur (2) sur le ou du système d'alimentation en énergie et/ou une connexion ou une désolidarisation de l'adaptateur (2) sur ou de l'interface adaptatrice (5) et/ou une connexion ou une désolidarisation du câble chargeur (1) sur ou de l'accumulateur d'énergie qui doit être chargé est identifiable par au moins un système de capteur dans le câble chargeur (1) et/ou dans l'adaptateur (2).

12. Dispositif de chargement selon l'une quelconque des revendications 7 à 11, **caractérisé en ce que** l'adaptateur (2) comporte un élément tactile, lequel lors d'une connexion de l'adaptateur (2) sur le système d'alimentation en énergie est soumis à une force et/ou déplacé, et **en ce qu'**un ensemble de capteurs est placé dans l'adaptateur (2) ou dans l'interface adaptatrice (5), pour détecter une soumission à une force et/ou un déplacement et/ou une position de l'élément tactile.

13. Procédé, destiné à charger électriquement un accumulateur d'énergie, notamment un accumulateur d'énergie d'un véhicule électrique, sur un système d'alimentation en énergie, pourvu d'un dispositif de chargement, notamment d'un dispositif de chargement selon l'une quelconque des revendications 7 à 12, comportant une ligne de charge (3), que d'une part, on connecte électriquement de manière amovible à l'aide d'un dispositif de raccordement (4) avec l'accumulateur d'énergie qui doit être chargé et que d'autre part, on connecte électriquement de manière amovible à l'aide d'un adaptateur (2) connecté de manière amovible par complémentarité de forme avec une interface adaptatrice (5) avec le système d'alimentation en énergie, **caractérisé en ce que** des signaux de commande sont transmis entre le système d'alimentation en énergie et une électronique du câble chargeur (1) et/ou de l'accumulateur d'énergie qui doit être chargé par l'intermédiaire du câble chargeur (1), sans fil, entre l'adaptateur (2) et l'interface adaptatrice (5).

14. Procédé selon la revendication 13, **caractérisé en ce qu'**on alimente un ensemble électronique de l'adaptateur (2) en énergie à partir d'au moins un contact de conducteur de signaux de commande de l'adaptateur (2), notamment une énergie provenant du contact de conducteur de signaux de commande étant accumulée temporairement jusqu'à ce qu'une quantité d'énergie prédéfinie soit atteinte, suite à quoi ledit ensemble électronique incite le système d'alimentation en énergie à démarrer un processus de charge.

15. Procédé selon la revendication 14, **caractérisé en ce qu'**une communication au moyen des signaux de commande transmis par l'intermédiaire de l'au moins un contact de conducteur de signaux de commande de l'adaptateur (2) et une alimentation énergétique de l'ensemble électronique de l'adaptateur (2) en énergie provenant de l'au moins un contact de conducteur de signaux de commande de l'adaptateur (2) sont réalisés simultanément.
